Europäisches Patentamt

(19) European Patent Office

Office européen des brevets

(11) Publication number: **0 032 797**
**B1**

(12) **EUROPEAN PATENT SPECIFICATION**

(45) Date of publication of patent specification: **11.04.84**　(51) Int. Cl.³: **B 65 G  15/52**

(21) Application number: **81300107.0**

(22) Date of filing: **12.01.81**

(54) Conveyor belt of the honeycomb type.

(30) Priority: **15.01.80 GB  8001306**

(43) Date of publication of application:
**29.07.81 Bulletin 81/30**

(45) Publication of the grant of the patent:
**11.04.84 Bulletin 84/15**

(84) Designated Contracting States:
**AT BE CH DE FR IT LI LU NL SE**

(56) References cited:
**DE - U - 1 859 581**
**GB - A - 1 443 665**
**GB - A - 1 471 232**
**US - A - 3 439 795**

(73) Proprietor: **U.M.E.C.-BOYDELL (BELTING) LIMITED
Alma Street
Heath Town Wolverhampton, WV10 0EY West
Midlands (GB)**

(72) Inventor: **Iddles, Roger Gilbert
4 Catesby Drive
Kingswinford West Midlands (GB)**

(74) Representative: **Stonehouse, Sidney William
Barker, Brettell & Duncan 138 Hagley Road
Edgbaston
Birmingham B16 9PW (GB)**

Courier Press, Leamington Spa, England.

Conveyor belt of the honeycomb type

This invention relates to conveyor belts of the honeycomb type comprising a series of transverse rods, and a plurality of open-work belt sections extending between and pivoted to the transverse rods, each belt section being of cranked or wavey form comprising a series of longitudinal components which extend longitudinally of the belt, are spaced apart transversely of the belt, have apertures therein through which the transverse rods pass, and are jointed at their ends by two rows of cross components (hereinafter referred to as "main cross components") extending transversely alongside the transverse rods, and adjacent belt sections longitudinally of the conveyor belt intermeshing with one another at the transverse rods. Such conveyor belts are hereinafter referred to as "of the honeycomb type described".

When the conveyor belt is in operation the substantial stresses to which the belt sections are subjected can cause them to distort and the distortion can ultimately lead to fracture of the belt sections and breakdown of the conveyor belt. Further, the distortion can result in additional loading being imposed on the drive to the conveyor belt which may cause a failure in the drive. The open-work structure of the belt sections does not readily lend itself to reinforcement, and therefore hitherto the serviceability of the belt sections has depended largely on the ability of the materials used in the manufacture of the belt sections to tolerate distortion.

A conveyor belt of the honeycomb type described is known in accordance with the prior art portion of claim 1 (DE—U—1859581) in which the belt sections have additional cross components, described as reinforcing ribs, which extend between and are joined to the longitudinal components and which are spaced from, and at opposite sides of the transverse rods to, the main cross components. The additional cross components are spaced well away from the main cross components and reduce the open-work structure of the belt sections. Moreover, the teaching of this prior art, is to thicken the main cross components and the longitudinal components in the vicinity of the transverse rods to reinforce the belt sections.

The invention as claimed relies upon the additional cross components and their positioning relative to the transverse rods to reinforce the belt sections effectively against distortion.

The present invention is characterised in that such an additional cross component is associated with each main cross component of each belt section, the additional cross component extending closely alongside the transverse rod and the arrangement being such that a substantially rectangular enclosure is defined by the main cross component, additional cross component and the portions of the longitudinal components extending between the main and additional cross components through which said enclosure the adjacent transverse rod extends and which said enclosure resists distortion of the belt section in the vicinity of the transverse rod.

The enclosures strengthen the belt sections laterally and thereby increase the resistance to bending of the main cross components joined to the ends of the longitudinal components, both from longitudinal forces on the belt which tend to urge the longitudinal components together and from relative movement between adjacent belt sections, and between the belt sections and their supporting transverse rods when the conveyor belt travels round lateral curves. The joints between the longitudinal components and the main cross components are also relieved of at least some of the stresses to which joints of the conventional conveyor belts of the honeycomb type described have been prone, and which have made the joints particular points of weakness in the belt sections.

Whilst the belt sections are strengthened they also retain the essential open-work structure. Conveyor belts of the honeycomb type described are used to a large extent in the food preparation industry. The open-work structure of the belt sections is most advantageous in such use because it permits water and other liquids, and solid matter, to drain and fall away freely from the belt, and it facilitates cleansing of the belt so that the standards of hygiene required in the handling of foodstuffs can be complied with satisfactorily. The conveyor belt in accordance with the present invention is suitable for such use. Any matter which may collect on the transverse rods, or between the transverse rods and the main and additional cross components can be cleaned off readily.

The belt sections may be formed as plastics mouldings, each section conveniently being a unitary moulding including the additional cross components. Alternatively the belt sections may be made of metal, for example continuous metal strip bent to form the longitudinal components and the main cross components joining the ends of the longitudinal components and further strips secured, as by welding for example, between the longitudinal components to provide the additional cross components.

An embodiment of the present invention will now be described by way of example with reference to the accompanying drawings in which:

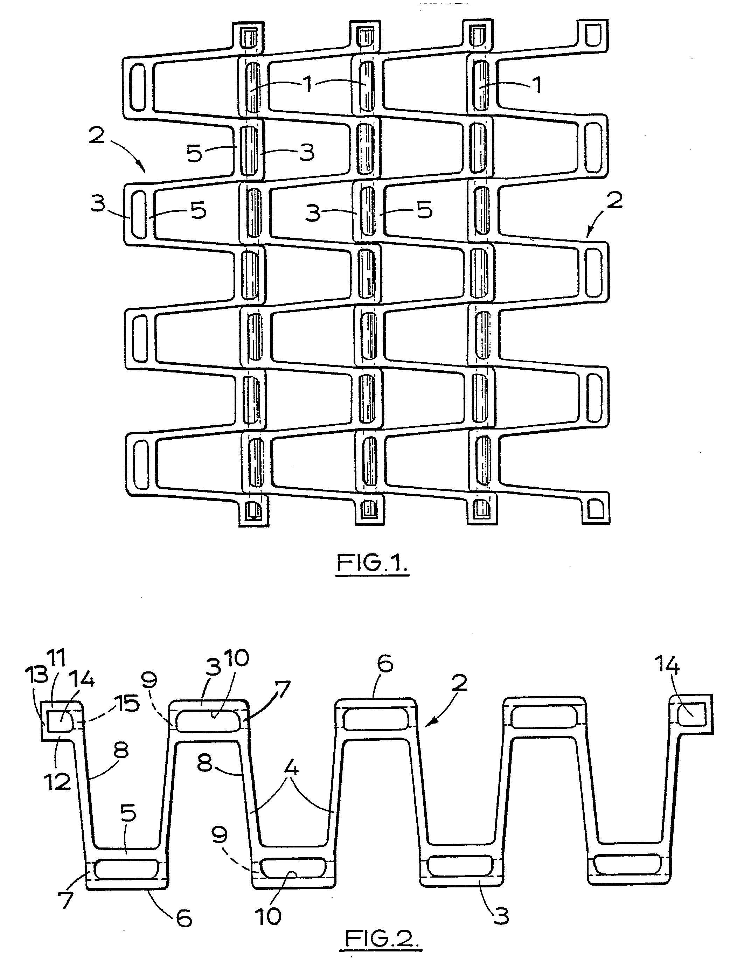

Figure 1 is a plan view of part of the length of a conveyor belt, and

Figure 2 is an enlarged plan view of a belt section of the conveyor belt.

The conveyor belt comprises a series of transverse metal rods 1 and a plurality of moulded plastics belt sections 2 spanning and pivoted to the rods. Adjacent belt sections 2 longitudinally of the conveyor belt intermesh at the transverse rods 1. Each belt section extends across the full width of the belt.

The belt sections 2 each comprise two parallel rows of main cross components 3 joined by a series of integral longitudinal components 4 extending lengthwise of the belt, such that the belt section is of cranked form. Joined at their ends integrally to the longitudinal components are additional cross components 5 which are spaced from, and are parallel to, the main cross components 3. The longitudinal components 4 are of oblong rectangular cross-section disposed on edge, as are the additional cross components, in the normal load supporting position of use of the belt section. The main cross components have a narrow generally D-shaped cross-section, their rounded sides 6 facing outwardly away from the other row of main cross components of the belt section and the adjacent additional cross components. The longer dimensions of the cross-sections of the longitudinal components, main and additional cross components are all the same, and opposite ends of the cross-sections of the components lie in common planes.

The portions 7 of each longitudinal component 4 between the main cross components 3 and the adjacent additional cross components 5 extend at right angles to those components. Each main cross component, the adjacent additional cross component and the portions 7 of the longitudinal components between the two cross components therefore define in combination an elongated, rectangular configuration. The portion 8 of each longitudinal component between the additional cross components 5 joined to the longitudinal component extends obliquely to the additional cross components such that the oblique portions 8 of the two longitudinal components to which an additional cross component is joined extend divergently away from the additional cross component. The rectangular configurations described and the divergency of the oblique portions 8 of the longitudinal components enable adjacent belt sections lengthwise of the assembled conveyor belt to intermesh closely at the transverse rods.

In each of the portions 7 of the longitudinal components 4 of a belt section between the main cross components and the adjacent additional cross components there is an aperture 9. The transverse rods to which the belt section is pivoted pass through the apertures 9 and the spaces 10 defined between the main and additional cross components, that is within the rectangular configurations described. The apertures 9 are of diameters complementary to the transverse rods which fit freely in the apertures. The spaces 10 are only slightly wider than the diameters of the transverse rods so that the main and additional cross components lie close to the transverse rods.

At the free ends of the longitudinal components which are at the sides of the belt section and define the longitudinal sides of the conveyor belt, there are shortened main and additional cross components 11 and 12 respectively. The spaces between these shortened cross components 11, 12 are stopped off at the ends remote from the side longitudinal components by webs 13 joined integrally to the cross components. Thus the shortened main and additional cross components and the webs 13 define sockets 14. The sockets 14 receive the ends of the transverse rods which are entered into the sockets through apertures 15 in the side longitudinal components. The engagement of the ends of the transverse rods in the sockets retains the transverse rods to the belt sections. Lateral movement of the transverse rods relative to the belt sections is prevented by the webs 13. There is sufficient flexibility in the side longitudinal components to permit their free ends to be deflected laterally outwardly for the ends of the transverse rods to be inserted in the sockets 14.

The conveyor belt is driven by sprockets, not shown, at spaced positions across the width of the belt, the sprockets being mounted on a common drive shaft. The rounded sides 6 of the main cross components are engaged by the sprockets and nestle closely between the teeth of the sprocket.

When the belt is to travel a sinuous path in use the apertures in the longitudinal components are elongated, and the spacing of the additional cross components from the main cross components is increased, so as to allow the required relative movement between adjacent belt sections, and between the belt sections and transverse rods, to permit the belt to pass round the lateral curves.

Whilst the additional cross components of the belt sections in the embodiment described have cross-sections similar to those of the longitudinal components and of the same longitudinal dimensions as the longitudinal and main cross components, the additional cross components are not limited to being of those cross-sections and dimensions. They may be of other cross-sections and dimensions but it is advantageous for the components to have surfaces in the planes of those surfaces of the longitudinal components and main cross components which form supporting surfaces of the belt sections in use, thereby to provide further supporting surfaces on the belt sections.

## Claims

1. A conveyor belt of the honeycomb type comprising a series of transverse rods (1) and a plurality of openwork belt sections (2) extending between and pivoted to the transverse rods (1), each belt section (2) being of cranked or wavey form comprising a series of longitudinal components (4) which extend longitudinally of the belt, are spaced transversely of the belt, have apertures (7) therein near their opposite ends through which the transverse rods (1) pass, and are joined at their ends by rows of main cross components (3) extending transversely alongside the transverse rods (1), and adjacent belt sections (2) longitudinally of the conveyor belt intermeshing with one another at the transverse rods (1), wherein the belt sections (2) have additional cross components (5) which extend between and are joined to the longitudinal components (4) and which are spaced from, and at opposite sides of the transverse rods (1) to, the main components (3) characterised in that such an additional cross component (5) is associated with each main cross component (3) of the belt section (2), the additional cross component (5) extending closely alongside the transverse rod and the arrangement being such that a substantially rectangular enclosure is defined by the main cross component (3), additional cross component (5) and the portions (7) of the longitudinal components (4) extending between the main and additional cross components (3, 5) through which said enclosure the adjacent transverse rod (1) extends and which said enclosure resists distortion of the belt section in the vicinity of the transverse rod (1).

2. A conveyor belt according to claim 1 characterised in that the main cross components (3) joining the opposite ends of the longitudinal components (4) of each belt are of similar lengths and of similar cross-sections, each said cross-section having a rounded side (6) remote from the adjacent transverse rod (1) adapted to be engaged by driving sprockets between teeth thereof.

3. A conveyor belt according to claim 1 or claim 2 characterised in that each belt section (2) extends across the full width of the belt, and those of the longitudinal components (4) which are at the sides of the belt section (2) have sockets (14) defined at free ends thereof opposite apertures (7) in the free ends for the respective transverse rod (1), by shortened main and additional cross components (11, 12) which project laterally from said longitudinal components (4) at opposite sides of the apertures (7) and are joined at their ends remote from said longitudinal components (4) by webs (13) extending therebetween, and the ends of the respective transverse rod (1) are received into the sockets (14) which thereby retain the transverse rod (1) to the belt section (2).

**Revendications**

1. Courroie transporteuse du type en nid d'abeilles comprenant une série de barrettes transversales (1) et plusieurs éléments de courroie (2) ajourés, disposés entre ces barrettes transversales (1) et articulés sur celles-ci, chaque élément de courroie (2) ayant une forme coudée ou ondulée comprenant une série de composants longitudinaux (4) qui sont orientés dans le sens de la longueur de la courroie, sont espacés transversalement à cette courroie, comportent près de leurs extrémités opposées des ouvertures (7) dans lesquelles les barrettes transversales (1) passent et sont reliées à leurs extrémités par des rangées de composants transversaux principaux (3), longeant transversalement les barrettes transversales (1), et les éléments de courroie (2) adjacents dans le sens de la longueur de la courroie transporteuse étant intercalés sur ces barrettes transversales (1), lesdits éléments de courroie (2) comportant des composants transversaux supplémentaires (5) qui sont disposés entre les composants longitudinaux (4) et y sont reliés et qui se trouvent à une certaine distance des composants principaux (3), des côtés opposés des barrettes transversales (1), courroie caractérisée en ce qu'un tel composant transversal supplémentaire (5) coopère avec chaque composant transversal principal (3) de l'élément de courroie (2), ce composant transversal supplémentaire (5) longeant de très près la barrette transversale et la disposition étant telle qu'il soit formé, par le composant transversal principal (3), le composant transversal supplémentaire (5), et les parties (7) des composants longitudinaux (4) comprises entre ces composants transversaux principal et secondaire (3, 5), une enceinte sensiblement rectangulaire, à travers laquelle la barrette transversale (1) adjacente passe et qui résiste à la déformation de l'élément de courroie au voisinage de cette barrette transversale (1).

2. Courroie transporteuse selon la revendication 1, caractérisée en ce que les composants transversaux principaux (3) qui relient les extrémités opposées des composants longitudinaux (4) de chaque élément de courroie, ont les mêmes longueurs et les mêmes sections, chacune de ces sections présentant un côté arrondi (6) éloigné de la barrette transversale (1) adjacente et destiné à être mis en prise avec des roues dentées pour chaîne d'entraînement, entre les dents de ces roues.

3. Courroie transporteuse selon la revendication 1 ou la revendication 2, caractérisée en ce chaque élément de courroie (2) couvre toute la largeur de la courroie; ceux des composants longitudinaux (4) qui sont sur les bords de l'élément de courroie présentent à leur extrémité libre, en face des ouvertures (7) de ces extrémités libres destinées aux barrettes transversales (1) respectives, des logements (14) délimités par des composants transversaux principaux et supplémentaires (11, 12) plus courts, qui font saillie latéralement de ces composants longitudinaux (4), des côtés opposés à ces ouvertures (7), et qui sont reliés à leurs extrémités éloignées de ces composants longitudinaux (4) par des joues (13) s'étendant entre eux; et les extrémités de la barrette transversale (1) respective pénètrent dans ces logements qui, de cette façon, maintiennent ladite barrette transversale (1) sur l'élément de courroie (2).

## Patentansprüche

1. Förderband nach Art eines Wabenbandes, mit einer Reihe von Querstangen (1) und zahlreichen durchbrochenen Bandabschnitten (2), die sich zwischen den Querstangen (1) erstrecken und an diesen schwenkbar gelagert sind, wobei jeder Bandabschnitt (2) eine gekröpfte oder wellige Form mit einer Reihe von Längsteilen (4) aufweist, die sich in Längsrichtung des Bandes erstrecken, in Querrichtung des Bandes beabstandet sind, Öffnungen (7) nahe ihrer einander gegenüberliegenden Enden enthalten, durch die die Querstangen (1) hindurchtreten, und die an ihren Enden über Reihen von Hauptquerteilen (3), die sich quer längs der Querstangen (1) erstrecken, und angrenzende Bandabschnitte (2) verbunden sind, die in Längsrichtung des Förderbandes gegenseitig an den Querstangen (1) ineinander greifen, wobei die Bandabschnitte (2) Zusatzquerteile (5) besitzen, die sich zwischen den Längsteilen (4) erstrecken und mit diesen verbunden sind, und die von den Hauptteilen (3) beabstandet und an gegenüberliegenden Seiten der Querstangen (1) angeordnet sind, dadurch gekennzeichnet, daß ein derartiges Zusatzquerteil (5) jedem Hauptquerteil (3) des Bandabschnitts (2) zugeordnet ist, wobei sich das Zusatzquerteil (5) dicht längs der Querstange (1) erstreckt und derart angeordnet ist, daß von dem Hauptquerteil (3), dem zusätzlichen Querteil (5) und den Abschnitten (7) der Längsteile (4) eine sich zwischen den Haupt- und den Zusatzquerteilen erstreckende, im wesentlichen rechtwinklige Einfassung gebildet wird, durch die sich die angrenzende Querstange (1) erstreckt, und die Widerstand gegen eine Verformung des Wandabschnitts in der Nähe der Querstange leistet.

2. Förderband nach Anspruch 1, dadurch gekennzeichnet, daß die Hauptquerteile (3), die die gegenüberliegenden Enden der Längsteile (4) jeden Bandes verbinden, ähnliche Längen und ähnliche Querschnitte aufweisen, wobei jeder Querschnitt eine von der angrenzenden Querstange (1) entfernt liegende, abgegrundete Seite (6) besitzt, die für den Angriff der Zähne von Antriebskettenrädern vorgesehen sind.

3. Förderband nach Anspruch 1 oder 2, dadurch gekennzeichnet, daß sich jeder Bandabschnitt (2) über die volle Breite des Bandes erstreckt, und daß die Längsteile (4), die an den Seiten des Bandabschnitts (2) liegen, an ihren freien Enden Buchsen (14) besitzen, die gegenüber den Öffnungen (7) in den freien Enden für die jeweilige Querstange (1) durch gekürzte Haupt- und Zusatzquerteile (11, 12) gebildet sind, die seitlich von den Längsteilen (4) an gegenüberliegenden Seiten der Öffnungen (7) hervorstehen und an ihren, von den Längsteilen (4) entfernt liegenden Enden mittels sich zwischen diesen erstreckenden Stegen (13) verbunden sind, und daß die Enden der jeweiligen Querstange (1) in den die Querstange in dem Förderband festhaltenden Buchsen (14) aufgenommen sind.

FIG.1.

FIG.2.